# EUROPEAN PATENT SPECIFICATION

(11) **EP 3 228 736 B1**
(45) Date of publication and mention of the grant of the patent: **26.01.2022**
(21) Application number: 15865501.9
(22) Date of filing: 27.11.2015
(51) Int. Cl.: D01F 6/74, C08L 79/04, D01F 9/00, D01F 9/24, D01F 6/78, D01F 6/94

(54) **CARBON-FIBER PRECURSOR FIBER AND METHOD FOR PRODUCING CARBON FIBER**
KOHLEFASERVORLÄUFERFASER UND VERFAHREN ZUR HERSTELLUNG VON KOHLENSTOFFFASERN
FIBRE PRÉCURSEUR DE FIBRE DE CARBONE ET PROCÉDÉ DE PRODUCTION DE FIBRE DE CARBONE

(30) Priority: 03.12.2014 JP 2014244732
(43) Date of publication of application: 11.10.2017
(73) Proprietor: National Institute of Advanced Industrial Science and Technology, Tokyo 100-8921 (JP)
(72) Inventor: HATORI, Hiroaki, Tsukuba-shi Ibaraki 305-8569 (JP); TOMITA, Naoko, Tsukuba-shi Ibaraki 305-8560 (JP); KODAMA, Masaya, Tsukuba-shi Ibaraki 305-8569 (JP)
(74) Representative: Graf von Stosch, Andreas
(86) International application number: PCT/JP2015/083342
(87) International publication number: WO 2016/088663

(56) References cited:
- WO-A1-2007/129640
- WO-A1-2014/084164
- WO-A1-2014/084164
- WO-A1-2015/170623
- JP-A- H06 505 693
- JP-A- 2003 064 180
- JP-A- 2012 505 287

## Description

### Technical Field

The present invention relates to: a carbon fiber precursor fiber using a novel heat-resistant aromatic polymer and not needing an infusibilization treatment (a pre-treatment including a flame resistance-imparting treatment); and a method for producing a carbon fiber.

### Background Art

Carbon fibers have been used in a wide variety of applications from aircraft to building materials. If their productivity is improved and their cost is lowered more and more, they can be materials in place of stainless steel plates also in automobile body and the like. At present, carbon fibers are mainly produced using polyacrylonitrile (PAN) fibers and pitch fibers as raw materials (carbon fiber precursor fibers).

These carbon fiber precursor fibers, however, need a pre-treatment called an infusibilization treatment prior to carbonization, and this treatment is a major barrier to reduction in cost and energy required for their production, and to increase in productivity.

Specifically, since PAN fibers and pitch fibers are fused in the course of a carbonization treatment (a high-temperature thermal treatment at 1,000°C or higher) and cannot maintain their fiber shapes, they are changed to infusible, flame-resistant fibers by an air oxidization treatment called an infusibilization treatment and then are subjected to carbonization to obtain carbon fibers. In this infusibilization treatment, it is necessary to uniformly control oxidation reaction and also strictly manage temperature conditions for suppressing thermal runaway due to exothermic reaction.

Meanwhile, some kinds of heat-resistant aromatic polymers (e.g., aramid fibers and phenol resin fibers) have such properties that they are carbonized without being fused, and thus it is possible to obtain carbon fibers only by forming such polymers into fibers and subjecting the resultant fibers to a high-temperature thermal treatment.

Although aramid fibers and phenol resin fibers are carbonized while maintaining their fiber shape, they have problems that their mechanical strengths (e.g., tensile strength and elastic modulus) are poor.

That is, when only carbonization is performed while shapes are being maintained, sufficient mechanical properties (e.g., strength and elasticity) required for carbon fiber products are not developed, and thus there is still a need to develop new materials realizing sufficient mechanical properties.

Also, the present inventors previously found out a graphite film containing a heterocyclic polymer obtained through condensation between an aromatic tetracarboxylic acid and an aromatic tetraamine (see PTL 1).

However, when crystallization excessively high in two-dimensional (layer-form) orientation occurs like in a graphite film, cracks of fibers occur due to delamination in a parallel direction to graphite crystal layers bonded only via intermolecular force, and strength as fibers is problematically very weak.

In view of the above, the present inventors found out a carbon fiber using poly[bis-(benzimidazobenzisoquinoline)] (PBB) as a precursor fiber (see NPL 1). This carbon fiber (PBB carbon fiber) can be obtained only by performing a high-temperature thermal treatment on the precursor fiber without an infusibilization treatment, and exhibits excellent mechanical properties.

However, the PBB has not yet been a widely used material and is an expensive material as compared with the existing precursor fibers. Thus, at present, there is a problem in terms of cost when putting PBB carbon fibers into practice.

Meanwhile, a resin formed from a polymer material having a polyoxadine structure as a repeating unit is known as a relatively low cost resin (see NPL 2). That is, this polymer material is a polymer that can be synthesized using, as raw materials, phenols, anilines, and paraformaldehyde, which are widely used as organic compound materials, and thus it can be produced at a low cost.

However, such a polymer material has only been studied for applications to resin films, and has not been studied for preparation in the fibrous form and formation into carbon fibers. Thus, it has been unclear as to carbonization conditions including an infusibilization treatment and as to mechanical strengths when it is carbonized. Also, substances having an oxadine ring develop thermal curability through ring-opening polymerization by a thermal treatment, and thus can be seen as one kind of a phenol resin. Therefore, those substances are expected to have an amorphous structure with no orientability even after carbonization, and as a result it has been considered difficult to obtain practical carbon fiber products excellent in mechanical strengths. In actual, monomers having an oxadine structure are practically used as a thermosetting resin, a matrix agent for composite materials, or a sizing agent for carbon fibers. However, no example has been reported that polymer materials having an oxadine structure were carbonized into carbon fiber products.

PTL2 discloses PBI carbon fibers and a method of producing such PBI fibers (PBI: polybenzimidazole). The PBI fibers have an elastic modulus in tension of 100 GPa or more and a tensile strength of 0.8 GPa or more. The method for producing a PBI carbon fiber is based on spinning a polymer including a polybenzimidazole to obtain a first precursor fiber of the polymer and, after contacting the first precursor fiber with a basic solution, neutralizing the acid solution remaining in the first precursor fiber to be removed, to thereby obtain a second precursor fiber. The second precursor fiber is heated to a temperature of 1000°C to 1600°C under an inert gas atmosphere to thereby convert the second precursor fiber to a carbon fiber.

PTL3 describes a precursor fiber and a method for producing such a precursor fiber. PTL3 uses poly[bis-(benzimidazoisoquinoline)](PBB) as monomeric unit of the carbon fiber precursor.

PTL4 discloses a curable resin containing a dihydrobenzoxazine ring structure which can be used as a fiber, e.g. for laminated printed wiring boards, as semi-conductor sealing material etc. or as a carbon fiber.

PTL5 discloses polymers derived from polyamic acid or a polyimide. The polyamic acid or the polyimide includes a repeating unit obtained from an aromatic diamine including at least one ortho-positioned functional group with respect to an amine group and a dianhydride. The polymer may be used as a fiber.

### Citation List

### Patent Literature

PTL 1: Japanese Patent Application Laid-Open (JP-A) No. 2011- 57474
PTL2: International Patent Application Laid-Open (WO-A1) No. 2015/170623
PTL3: International Patent Application Laid-Open (WO-A1) No. 2014/084164
PTL4: Japanese Patent Application Laid-Open (JP-A) No. 2003-064180
PTL5: Japanese Patent Application Laid-Open (JP-A) No. 2012-505287

### Non-Patent Literature

NPL 1: Proceedings of The 40th Annual Meeting of The Carbon Society of Japan, 3B08 (2014)
NPL 2: T. Takeichi et al, Polymer 46 (2005), 12172-12180.

### Summary of Invention

### Technical Problem

The present invention aims to solve the above existing problems and achieve the following object. That is, an object of the present invention is to provide: a carbon fiber precursor fiber that can efficiently produce a carbon fiber at a low cost which is excellent in mechanical strengths even without an infusibilization treatment; and a method for producing the carbon fiber.

### Solution to Problem

Means for solving the above problems are as follows.
<1> A carbon fiber precursor fiber, including:
   a polymer containing a constituent unit represented by General Formula (1) below: 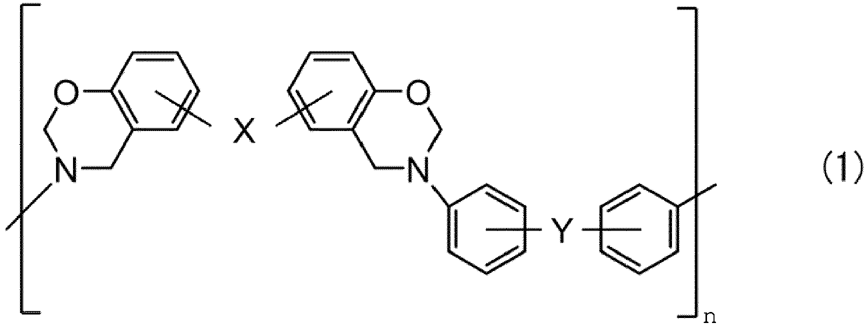
   where in the General Fomula (1), X and Y each independently represent a divalent substituent, a single bond, or a structure forming a fused ring by sharing one side of two adjacent rings, and the divalent substituent is selected from the group consisting of-O-, -S-, -OSO-, -NH-, -CO-, -CH₂-, and -CH(CH₃)₂- and where n is 100 to 100,000.
<2> The carbon fiber precursor fiber according to <1> above, further including a polymer containing a constituent unit represented by General Formula (2) below: 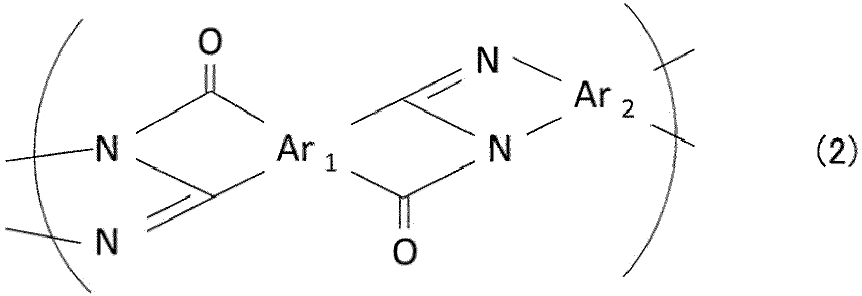 where in the General Formula (2), Ar₁ represents an aryl group expressed by any one of Structural Formulas (1) to (5) below, and Ar₂ represents an aryl group expressed by Structural Formula (6) or (7) below: 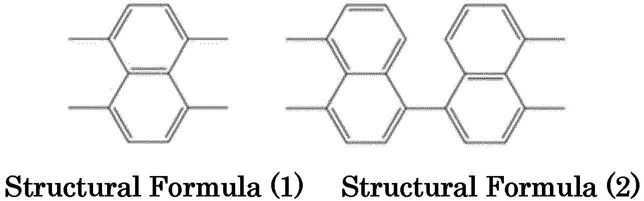 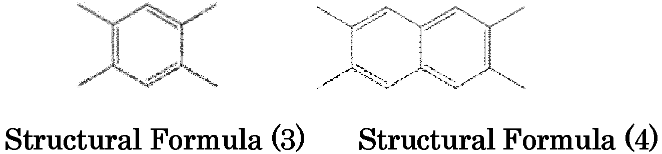 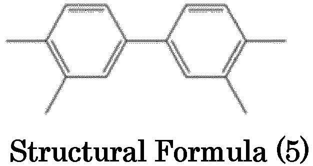 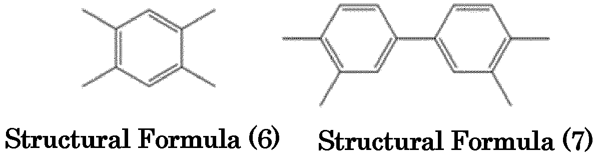
<3> A method for producing a carbon fiber, the method including:
   spinning a compound to be spun containing a polymer containing a constituent unit represented by General Formula (1) below to obtain a carbon fiber precursor fiber; and
   heating the carbon fiber precursor fiber under inert gas to carbonize the carbon fiber precursor fiber: 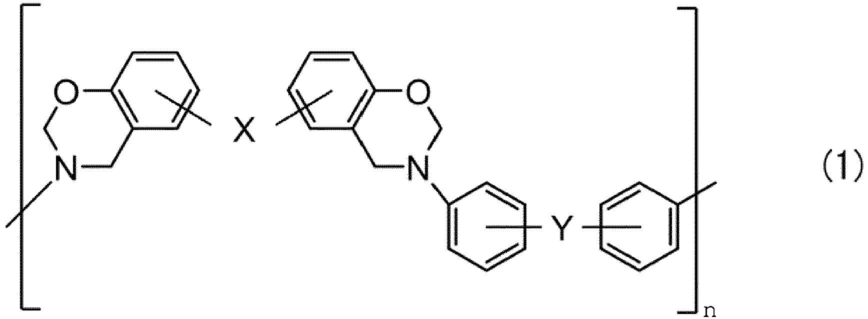
   where in the General Fomula (1), X and Y each independently represent a divalent substituent, a single bond, or a structure forming a fused ring by sharing one side of two adjacent rings, and the divalent substituent is selected from the group consisting of -O-, -S-, -OSO-, -NH-, -CO-, -CH₂-, and -CH(CH₃)₂-.
<4> The method for producing a carbon fiber according to <3> above, wherein the spinning is spinning the compound to be spun containing the polymer containing the constituent unit represented by the General Formula (1) and a compound to be spun containing a constituent unit represented by General Formula (2) below, to obtain a carbon fiber precursor fiber: 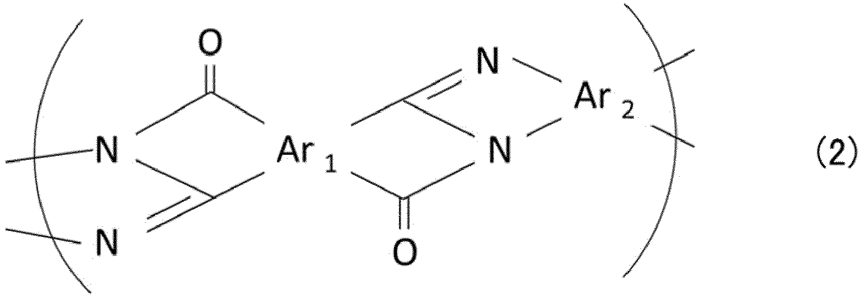
where in the General Formula (2), Ar₁ represents an aryl group expressed by any one of Structural Formulas (1) to (5) below, and Ar₂ represents an aryl group expressed by Structural Formula (6) or (7) below:

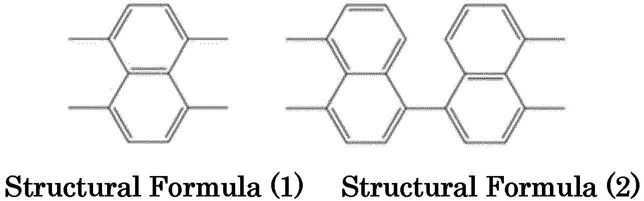

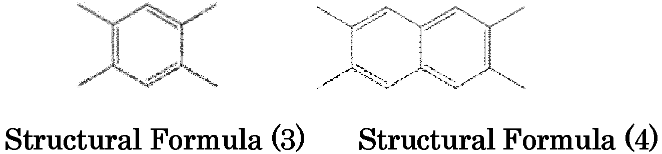

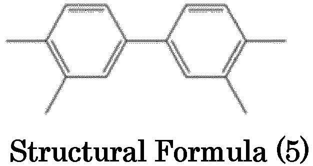

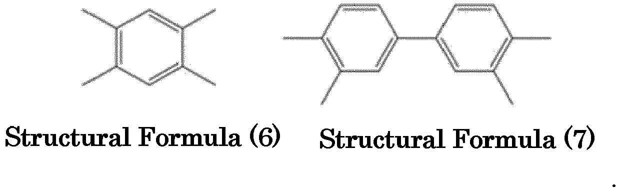

### Advantageous Effects of Invention

According to the present invention, it is possible to solve the above existing problems and provide a carbon fiber precursor fiber that can efficiently produce a carbon fiber at a low cost which is excellent in mechanical strengths even without an infusibilization treatment; and a method for producing the carbon fiber.

### Brief Description of Drawings

FIG. 1A is a scanning microscopic image of carbon fibers according to Example 1-2.
FIG. 1B is a scanning microscopic image that is enlarged in the fiber length direction of the carbon fibers depicted in FIG. 1A.
FIG. 1C is a scanning microscopic image that is enlarged in the fiber diameter direction of the carbon fibers depicted in FIG. 1A.
FIG. 2A is a conceptual diagram indicating plane interval c/2 of carbon network planes and stack thickness L_{c} of carbon network planes in a graphite crystal.
FIG. 2B is a conceptual diagram indicating an optical system in measuring wide angle X-ray diffraction.

### Description of Embodiments

### (Carbon Fiber Precursor Fiber and Method for Producing the Same)

A carbon fiber precursor fiber of the present invention is a fibrous material containing a polymer containing a constituent unit represented by General Formula (1) below.

The fibrous material of the polymer can be carbonized as is without an infusibilization treatment. Also, it can have sufficient mechanical strengths when carbonized with a thermal treatment. One possible reason for this is as follows. Specifically, as represented in the General Formula (1), the polymer has a rod-like aromatic polymer structure at the stage before formed into a fiber. With this structure, the polymer has such a property that the molecules will easily be arranged in the fiber axis direction by the action of stress which the polymer chains will receive upon spinning. Once such a property has been imparted thereto upon the spinning, development of graphite crystals is made possible upon the carbonization while maintaining the fiber axis orientability. In addition, the cross-linked structure between the polymer chains through ring-opening polymerization unique to an oxazine ring (a heterocycle containing O and N atoms) makes it possible to allow the carbon fiber tissue structure to have an appropriate level of a non-crystalline structure which is necessary for increasing the strength of carbon fibers.

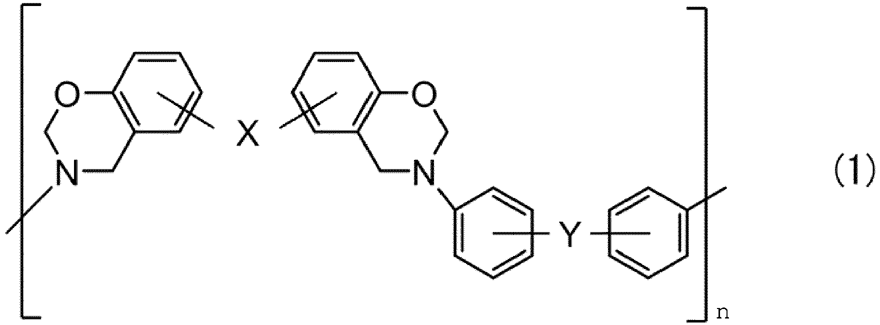

In the General Fomula (1), X and Y each independently represent a divalent substituent, a single bond, or a structure forming a fused ring by sharing one side of two adjacent rings, and the divalent substituent is selected from the group consisting of -O-, -S-, -OSO-, -NH-, -CO-, -CH₂-, and -CH(CH₃)₂-.

The polymer containing the constituent unit represented by the General Formula (1) can be synthesized by the following method.

Specifically, the above polymer can be obtained through reaction between the following starting materials: an aromatic dihydroxy compound represented by General Formula (3) below or a derivative of the aromatic dihydroxy compound such as an acid chloride thereof, an acid anhydride thereof, an ester thereof, or an amide thereof; an aromatic diamine represented by General Formula (4) below or a salt thereof; and paraformaldehyde.

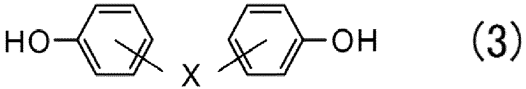

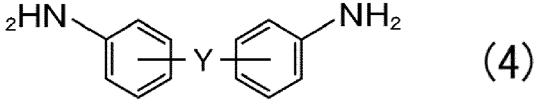

In the General Formulas (3) and (4), X and Y each independently represent a divalent substituent, a single bond, or a structure forming a fused ring by sharing one side of two adjacent rings, and the divalent substituent is selected from the group consisting of -O-, -S-, -OSO-, -NH-, -CO-, -CH₂-, and -CH(CH₃)₂-.

Specific examples of the aromatic dihydroxy compound include 4,4-dihydroxydiphenyl ether, bis(4-hydroxyphenyl)methane, bis(4-hydroxyphenyl)sulfide, bis(4-hydroxyphenyl)sulfone, bis(4-hydroxyphenyl)amine, 4'4-dihydroxybenzophenone, and 2,2,-bis(4-hydroxyphenyl)propane. Specific examples of the aromatic diamine compound include 4,4-diaminodiphenyl ether (which is also called 4,4-oxydianiline), bis(4-aminophenyl)sulfide, bis(4-aminophenyl)sulfone, bis(4-aminophenyl)amine, 4'4-diaminobenzophenone, and 2,2,-bis(4-aminophenyl)propane.

Examples of the structure forming a fused ring by sharing one side of two adjacent rings in X or Y in the General Formula (3) or (4) include a structure where the two adjacent rings form a naphthalene ring. In this case, the structures of X and Y are introduced into the constituent unit represented by the General Formula (1) as the structures of X and Y in the General Formula (1).

A polymerizing method for obtaining the polymer is, for example, as follows. Specifically, the aromatic dihydroxy compound or the derivative thereof and the aromatic diamine or the salt thereof are added to a reaction vessel containing the paraformaldehyde and a solvent. In chloroform, the resultant mixture is stirred and refluxed for 3 hours to 48 hours, to obtain the polymer containing the constituent unit represented by the General Formula (1).

The solvent is not particularly limited so long as it is a solvent that can dissolve the starting materials and does not prevent the polymerization. Specific examples of the solvent include chloroform, methanol, benzene, and toluene.

These compounds used as starting materials for the synthesis of the polymer may be synthesized by known methods or may be commercially available products that are purchased.

The carbon fiber precursor may be a fibrous material obtained from the polymer itself containing the constituent unit represented by the General Formula (1) as a repeating unit, but so long as the effects of the present invention are not impeded, the carbon fiber precursor may also be a fibrous material obtained from the above polymer having the end to which any substituent has been added.

Examples of the substituent include an ester group, an amide group, an imide group, a hydroxyl group, and a nitro group.

The number of the repeating units of the constituent unit represented by the General Formula (1) is 100 to 100,000.

The carbon fiber precursor fiber can be produced by spinning a compound to be spun (polymer) containing the polymer containing the constituent unit represented by the General Formula (1).

An intrinsic viscosity of the compound to be spun is not particularly limited but is preferably 0.05 dL·g⁻¹ to 5 dL·g⁻¹.

When the intrinsic viscosity thereof is less than 0.05 dL·g⁻¹, the fibers may be fractured during spinning. When it is more than 5 dL·g⁻¹, the compound to be spun may not homogeneously dissolve in the below-described solvent used for spinning. Note that, 1 dL·g⁻¹ is equivalent to 10⁻⁴ m³·g⁻¹.

So long as the effects of the present invention are not impeded, the carbon fiber precursor fiber may be a fibrous material obtained from a copolymer obtained by copolymerizing the constituent unit represented by the General Formula (1) and another constituent unit.

So long as the effects of the present invention are not impeded, the carbon fiber precursor fiber may also be a fibrous material containing another polymer.

Such another polymer is not particularly limited so long as it is a polymer that can be carbonized even without an infusibilization treatment. Examples thereof include aromatic polyamide, polyimide, polyoxadiazole, polyimidazole, and other polymers. Among them, the polymer containing the constituent unit represented by the General Formula (2) is preferable from the viewpoint of increasing the mechanical strengths.

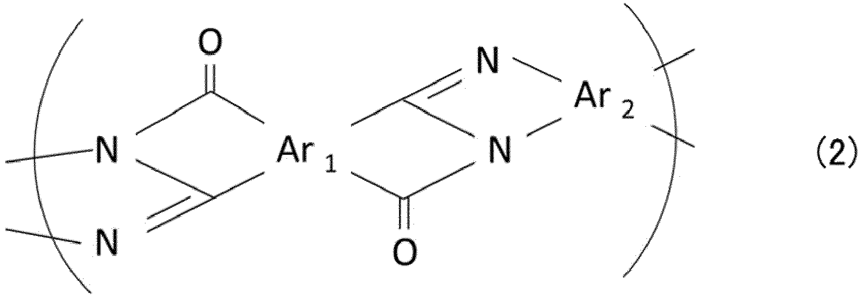

In the General Formula (2), Ar₁ represents an aryl group expressed by any one of Structural Formulas (1) to (5) below, and Ar₂ represents an aryl group expressed by Structural Formula (6) or (7) below.

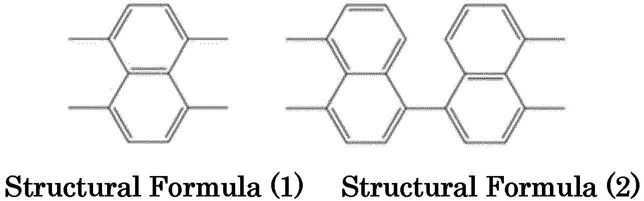

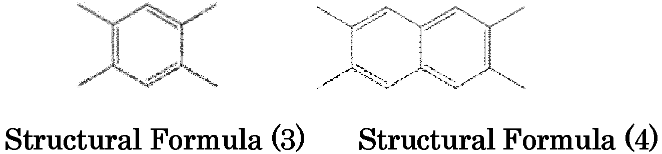

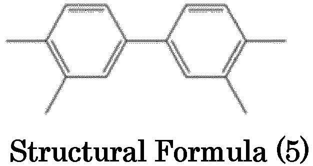

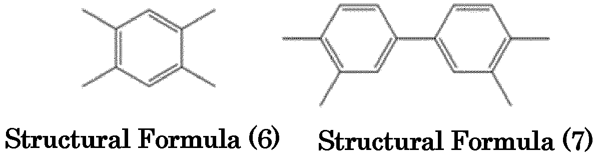

The polymer containing the constituent unit represented by the General Formula (2) can be synthesized by the following method.

Specifically, it can be obtained by reacting, as starting materials, aromatic tetracarboxylic acid or aromatic tetracarboxylic acid derivatives, such as acid chlorides, acid anhydrides, esters or amides thereof, with aromatic tetraamine or salts thereof.

Examples of the aromatic tetracarboxylic acids include 1,4,5,8-naphthalenetetracarboxylic acid and 4,4'-binaphthy-1,1',8,8'-tetracarboxylic acid. Examples of the aromatic tetraamines include 1,2,4,5-benzenetetraamine and 3,3',4,4'-biphenyltetraamine.

In one polymerization method employable, the aromatic tetracarboxylic acid or carboxylic acid derivatives thereof and the aromatic tetraamine or salts thereof are added to a reaction vessel containing a solvent, and the mixture is stirred at 100°C to 250°C for 3 hours to 48 hours, to thereby obtain the polymer containing the constituent unit represented by the General Formula (2) as a repeating unit.

The solvent is not particularly limited so long as it can dissolve the starting materials and formed polymers and has an effect as a catalyst of promoting polymerization. Specific examples thereof include polyphosphoric acid, polyphosphoric acid esters, and cresyl diphenyl phosphate, as well as methane sulfonic acid in which diphosphorus pentoxide or the like has been dissolved.

The 1,4,5,8-naphthalenetetracarboxylic acid can be synthesized from pyrene in 2 steps consisting of oxidation with potassium permanganate and oxidation with sodium hypochlorite solution. The 4,4'-binaphthy-1,1',8,8'-tetracarboxylic acid can be synthesized from 4-chloro-1,8,-naphthalic anhydride in 3 steps consisting of esterification, coupling, and hydrolysis. The 1,2,4,5-benzenetetraamine can be synthesized from m-chlorobenzene in 3 steps consisting of nitration, amination, and reduction of the nitro group, and isolated and used as tetrahydrochloride thereof. The 3,3',4,4'-biphenyltetraamine can be synthesized from o(ortho)-nitroaniline in 3 steps consisting of iodination, cross coupling, and reduction of the amino group.

Note that, commercially available products of them may also be purchased and used.

The polymer represented by the General Formula (2) may have any substituent added to the end thereof.

Examples of the substituent include an ester group, an amide group, an imide group, a hydroxyl group, and a nitro group.

The number of the repeating units of the constituent unit represented by the General Formula (2) is 100 to 100,000.

When the carbon fiber precursor fiber is composed of a fibrous material containing the polymer containing the constituent unit represented by the General Formula (1) and the polymer containing the constituent unit represented by the General Formula (2), a mixing ratio of the polymer containing the constituent unit represented by the General Formula (1) and the polymer containing the constituent unit represented by the General Formula (2) is preferably 1/3 to 3 as a mass ratio expressed by the following formula; i.e., "the polymer containing the constituent unit represented by the General Formula (2) / the polymer containing the constituent unit represented by the General Formula (1)".

When the mass ratio is less than 1/3, mechanical strengths cannot sufficiently be increased in some cases. Even when it is more than 3, mechanical strengths will remain unchanged, and the cost will simply increase in some cases.

The carbon fiber precursor fiber can be produced by spinning compounds to be spun including the polymer containing the constituent unit represented by the General Formula (1) and if necessary, the polymer containing the constituent unit represented by the General Formula (2) and the like.

A method for the spinning is not particularly limited and may be appropriately selected depending on the intended purpose. Examples thereof include known wet-type spinning methods and dry-type spinning methods.

A solvent used in the wet-type spinning methods and dry-type spinning methods is not particularly limited so long as it is a solvent in which the compound to be spun can dissolve. Examples thereof include chloroform, toluene, and methanesuofonic acid.

Also, a coagulation liquid for eluting the solvent and coagulating the compound to be spun as the carbon fiber precursor fiber is not particularly limited. Examples thereof include water, alcohol, and diluted sulfuric acid.

Even when the carbon fiber precursor fiber is made large in its fiber diameter, the carbon fiber precursor fiber is not impaired in its shape upon the subsequent carbonization treatment. The fiber diameter thereof is not particularly limited and may be appropriately selected depending on the intended purpose. It may be 50 µm or more, if necessary. Note that, the upper limit of the fiber diameter is about 1,000 µm.

In the preparation of the carbon fiber precursor fiber, a drawing treatment may be performed, if necessary. As the drawing treatment, spun yarn may be drawn directly in a coagulation bath, or wound yarn may be washed with water and then drawn in the bath. Also, a draw ratio is preferably about 1.2 times to about 10 times.

### (Carbon Fiber and Method for Producing the Same)

A carbon fiber of the present disclosure can be obtained by carbonizing the carbon fiber precursor fiber. Also, a method for producing the carbon fiber includes a carbonization step of heating the carbon fiber precursor fiber under inert gas to carbonize the carbon fiber precursor fiber.

The inert gas is not particularly limited, and examples thereof include nitrogen and argon gas.

A method for the heating is, for example, a method of performing pre-heating for ring-opening polymerization of the oxazine ring of the polymer containing the constituent unit represented by the General Formula (1) and then post-heating for carbonization of the ring-opening polymer.

The pre-heating is not particularly limited so long as the ring-opening polymerization reaction can proceed. However, it is preferably performed under temperature conditions of 200°C to 600°C in a nitrogen atmosphere for the purpose of making the production process highly efficient. When the drawing treatment is performed, this pre-heating may be performed at the same time as the drawing treatment.

In the method for producing the carbon fiber, the post-heating in the carbonization step can be rapidly performed.

Although conditions for the post-heating are not particularly limited, a temperature increasing rate can be set to 5 °C/min or more. The upper limit of the temperature increasing rate is about 500 °C/min. The temperature conditions of the post-heating heated most are preferably 800°C to 2,000°C. Heating at such a temperature makes it possible to carbonize the carbon fiber precursor fiber while maintaining its shape.

At this time, in the carbon fiber precursor fiber containing the polymer containing the constituent unit represented by the General Formula (1), it is possible to moderately perform both development of graphite crystals and impartment of a three-dimensional crosslinked structure, which makes it possible to produce carbon fibers having sufficient mechanical properties.

Also, in order to control the mechanical properties (e.g., strength and elasticity) of the carbon fiber obtained by the carbonization, the method for producing the carbon fiber may include, after the carbonization step or successively with the carbonization step, a graphitizing step of heating the carbon fiber at a higher temperature to graphitize the carbon fiber.

A heating temperature in the graphitizing step (a heating step to be performed successively with the carbonization step in some cases) is not particularly limited but is preferably 2,000°C to 3,200°C. Setting the heating temperature in such a range makes it possible to produce the carbon fibers having sufficient mechanical properties at high carbonization yield and high density.

Note that, the graphitizing step is preferably performed under the inert gas similar to the carbonization step.

Note that, the method for producing the carbon fiber may further include steps of performing a surface treatment and a sizing impartment, which are performed in known carbon fiber production processes.

By spinning the carbon fiber precursor fibers so as to be thick fibers in the spinning, the carbon fibers can be increased in diameter while maintaining mechanical strengths. Commercially available carbon fibers such as PAN-type carbon fibers usually have a fiber diameter of about 7 µm. Mechanical strengths of the carbon fibers are maintained not only in the case where the fiber diameter is 1 µm or more but less than 8 µm, but also in the case where the fiber diameter is 8 µm or more, and even in the case where the fiber diameter is 16 µm or more. Note that, the upper limit of the fiber diameter is about 30 µm.

Depending on the aspect of the spinning, the carbon fibers can be formed into short fibers (spun) or continuous fibers (filament).

### Examples

### (Example 1-1)

### <Synthesis of polyoxazine/PBB=1/1 carbon fiber precursor fibers>

In accordance with the following Synthesis Scheme (1), equimolar amounts of bis(4-hydroxyphenyl)methane (also called Bisphenol F, BPF, product of Tokyo Chemical Industry Co., Ltd., Distributor Code: No. B0819) and 4,4-oxydianiline (also called 4,4-diaminodiphenyl ether, ODA, product of Tokyo Chemical Industry Co., Ltd., Distributor Code: No. O0088) and a 4.3 times molar amount of paraformaldehyde (product of Tokyo Chemical Industry Co., Ltd., Distributor Code: No. P0018) were refluxed for 5 hours in chloroform (product of Wako Pure Chemical Industries, Ltd., Distributor Code: No. 038-02606) for polycondensation, to synthesize poly(N,N'-oxydiphenylene-4,4'-methylene dibenzoxazine) (hereinafter abbreviated as "polyBPF/ODA oxazine"). Note that, the intrinsic viscosity of this polyBPF/ODA oxazine was found to be 0.056 dL·g⁻¹.

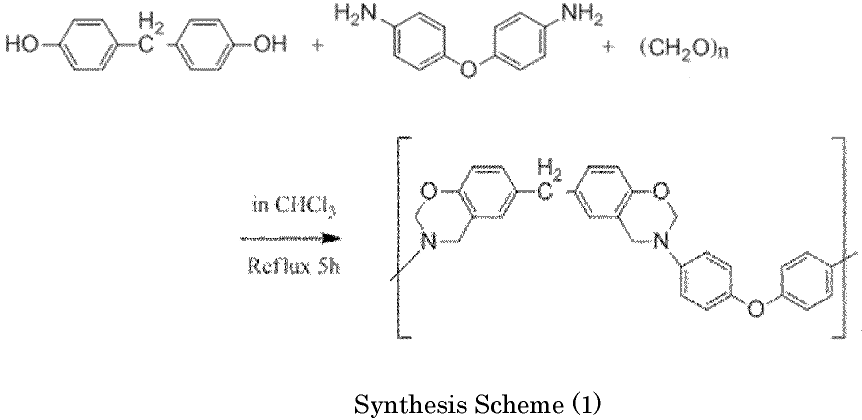

Next, 4-chloro-1,8-naphthalic anhydride (product of Alfa Aesar Co., Distributor Code: No. L05508) was allowed to undergo an esterification treatment, a coupling treatment, and a hydrolysis treatment in this order in accordance with the following Synthesis Scheme (2), to thereby synthesize 4,4'-binaphthy-1,1',8,8'-tetracarboxylic acid (hereinafter abbreviated as "BNTCA").

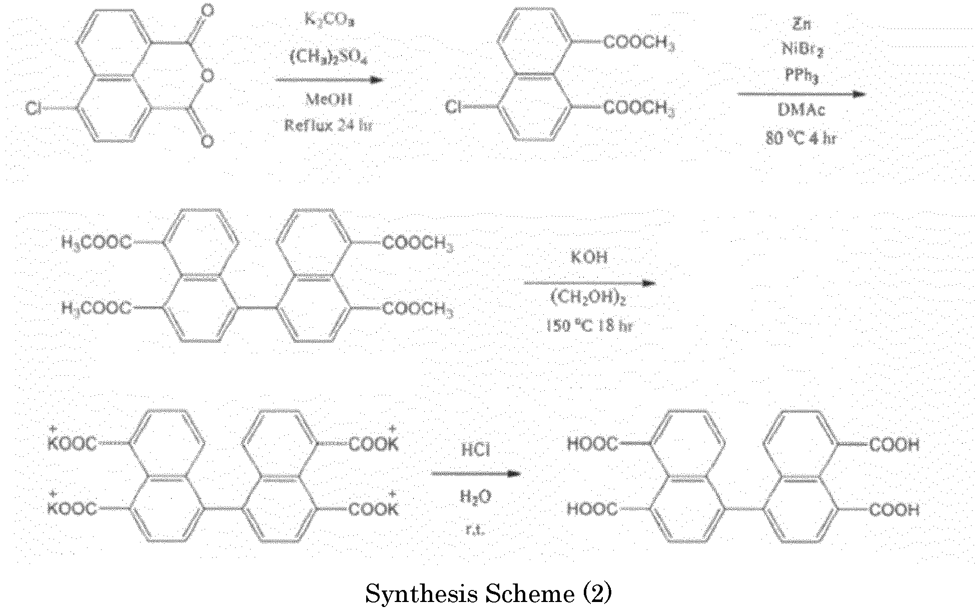

Note that, "DMAc" in the Synthesis Scheme (2) means dimethyl acetoamide.

Next, in accordance with the following Synthesis Scheme (3), equimolar amounts of BNTCA and 4,4'-biphenyl-1,1',2,2'-tetraamine (product of Aldrich Co., Distributor Code: No. D 12384, hereinafter abbreviated as "BPTA") were added to polyphosphoric acid (product of Sigma-Aldrich Co., Distributor Code: No. 208213, hereinafter abbreviated as "PPA") and were allowed to undergo polycondensation, to thereby synthesize poly[bis-(benzimidazoisoquinoline)] (hereinafter abbreviated as "PBB").

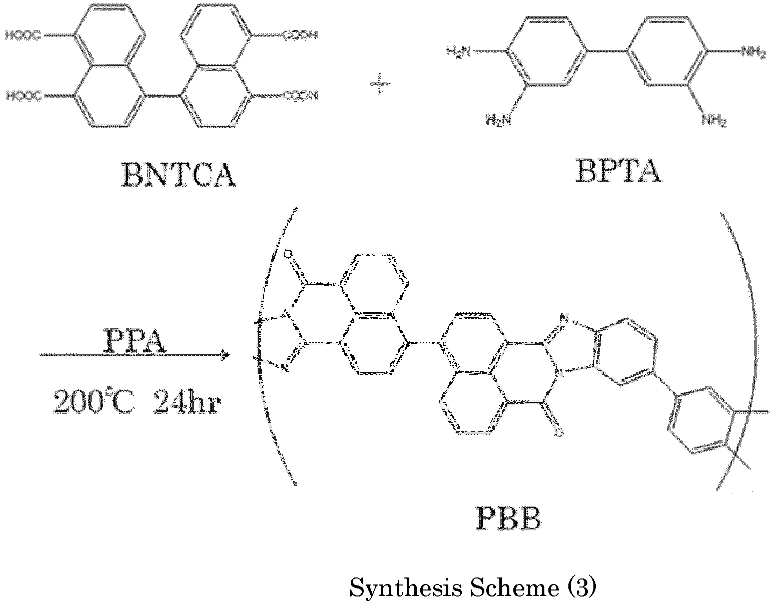

Next, 25 g of the synthesized polyBPF/ODA oxazine and 25 g of PBB were dissolved in 1 L of methanesulfonic acid (product of Wako Pure Chemical Industries, Co., Distributor Code: No. 138-01576, hereinafter abbreviated as "MSA") to prepare a raw liquid for spinning.

The raw liquid for spinning was introduced to a wet-type spinning device. While introduced to a water bath serving as a coagulation bath, the raw liquid for spinning was allowed to pass through a multihole nozzle member with 402 nozzle holes formed, and to be discharged as a bundle of 402 fibers. After washing and drying, this was wound by a winding device to obtain carbon fiber precursor fibers (hereinafter these spun fibers are abbreviated as "polyoxazine/PBB=1/1 carbon fiber precursor fibers"). The obtained polyoxazine/PBB=1/1 carbon fiber precursor fibers were found to have a fiber diameter of about 12 µm.

### <Carbonization Treatment>

The polyoxazine/PBB=1/1 carbon fiber precursor fibers were carbonized in a nitrogen atmosphere to produce carbon fibers of Example 1-1. Specifically, for the carbonization of the polyoxazine/PBB=1/1 carbon fiber precursor fibers, they were heated at 240°C for 30 minutes, then were heated to 1,300°C at a temperature increasing rate of 10 °C/min, and were maintained for 10 minutes. Note that, this carbonization treatment was performed in a state where a tension of 2 mN was applied to the polyoxazine/PBB=1/1 carbon fiber precursor fibers. The obtained carbon fibers were found to have a fiber diameter of about 9 µm.

### (Example 1-2)

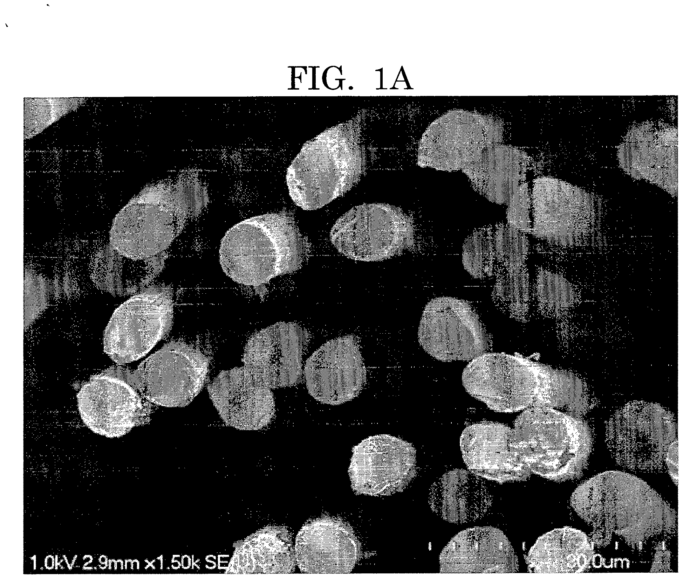

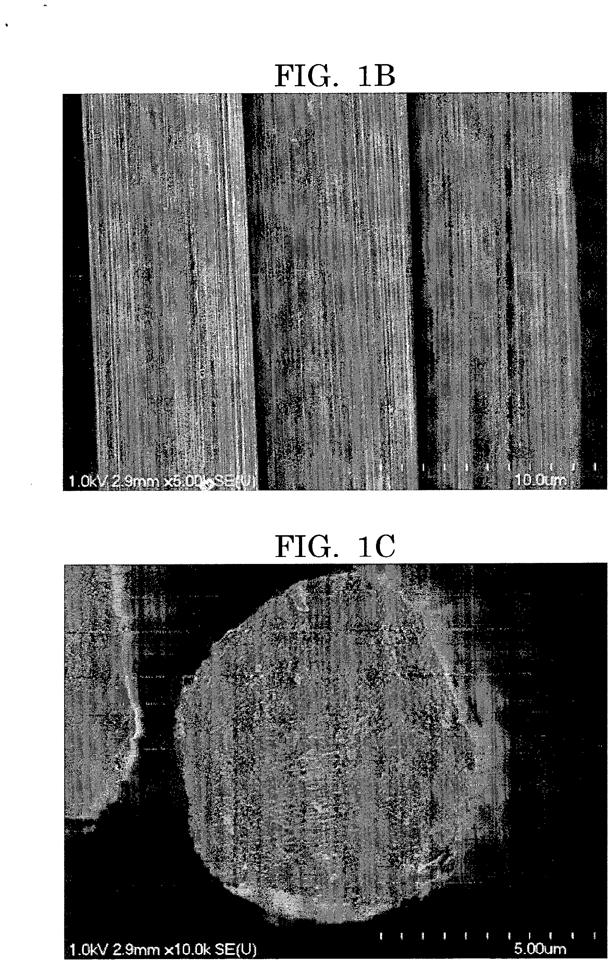

Carbon fibers according to Example 1-2 were produced in the same manner as in Example 1-1 except that the carbonization temperature was changed, i.e., the polyoxazine/PBB=1/1 carbon fiber precursor fibers were carbonized by being heated at 240°C for 30 minutes in a nitrogen atmosphere, then heated to 1,500°C at a temperature increasing rate of 10 °C/min, and maintained for 10 minutes. The obtained carbon fibers were found to have a fiber diameter of 9 µm.Microscopic images of the obtained carbon fibers according to Example 1-2 are depicted in FIGs. 1A to 1C. FIG. 1A is a scanning microscopic image of the carbon fibers according to Example 1-2. FIG. 1B is a scanning microscopic image that is enlarged in the fiber length direction of the carbon fibers depicted in FIG. 1A. FIG. 1C is a scanning microscopic image that is enlarged in the fiber diameter direction of the carbon fibers depicted in FIG. 1A.

### (Example 2-1)

Carbon fibers according to Example 2-1 were produced in the same manner as in Example 1-1 except that the amount of PBB added was changed; i.e., wet-type spinning was performed using a raw liquid for spinning prepared by dissolving 25 g of the polyBPF/ODA oxazine and 75 g of PBB in 1 L of the methanesulfonic acid (hereinafter the spun fibers are abbreviated as "polyoxazine/PBB=1/3 carbon fiber precursor fibers"). The obtained carbon fibers were found to have a fiber diameter of about 9 µm.

### (Example 2-2)

Carbon fibers according to Example 2-2 were produced in the same manner as in Example 2-1 except that the carbonization temperature was changed, i.e., the polyoxazine/PBB=1/3 carbon fiber precursor fibers were carbonized by being heated at 240°C for 30 minutes in a nitrogen atmosphere, then heated to 1,500°C at a temperature increasing rate of 10 °C/min, and maintained for 10 minutes. The obtained carbon fibers were found to have a fiber diameter of about 9 µm.

### (Example 3-1)

Carbon fibers according to Example 3-1 were produced in the same manner as in Example 2-1 except that the diameter of the nozzle holes of a wet-type spinning device was changed to obtain polyoxazine/PBB=1/3 carbon fiber precursor fibers having a fiber diameter of 20 µm.The obtained carbon fibers were found to have a fiber diameter of about 16 µm.

### (Example 3-2)

Carbon fibers according to Example 3-2 were produced in the same manner as in Example 3-1 except that the carbonization temperature was changed, i.e., the polyoxazine/PBB=1/3 carbon fiber precursor fibers were carbonized by being heated at 240°C for 30 minutes in a nitrogen atmosphere, then heated to 1,500°C at a temperature increasing rate of 10 °C/min, and maintained for 10 minutes. The obtained carbon fibers were found to have a fiber diameter of about 12 µm.

### (Comparative Example 1-1)

Carbon fibers according to Comparative Example 1-1 were produced in the same manner as in Example 1-1 except that the composition of the raw liquid for spinning was changed; i.e., the raw liquid for spinning used was prepared by dissolving only 50 g of PBB in 1 L of the methanesulfonic acid, and that the heat treatment at 240°C for 30 minutes was not performed and the carbonization was performed by heating from room temperature to 1,300°C at a temperature increasing rate of 10 °C/min and maintaining for 10 minutes. The obtained carbon fibers were found to have a fiber diameter of about 9 µm.

### (Comparative Example 1-2)

Carbon fibers according to Comparative Example 1-2 were produced in the same manner as in Comparative Example 1-1 except that the carbonization temperature was changed, i.e., the carbon fiber precursor fibers were carbonized by being heated from room temperature to 1,500°C at a temperature increasing rate of 10 °C/min in a nitrogen atmosphere and maintained for 10 minutes. The obtained carbon fibers were found to have a fiber diameter of about 9 µm.

### (Properties and Evaluation of Carbon Fibers)

### <Density>

Table 1 below presents densities of the carbon fibers calculated by the sink-float method.

**Table 1**

| Ex./Comp. Ex. | Polyoxazine/PBB | Carbonization temperature (°C) | Precursor fiber diameter (µm) | Carbon fiber diameter (µm) | Density (g/cm³) |
|---|---|---|---|---|---|
| Ex. 1-1 | 1/1 | 1,300 | 12 | 9 | 1.71 |
| Ex. 1-2 | 1/1 | 1,500 | 12 | 9 | 1.72 |
| Ex. 2-1 | 1/3 | 1,300 | 12 | 9 | 1.78 |
| Ex. 2-2 | 1/3 | 1,500 | 12 | 9 | 1.76 |
| Ex. 3-1 | 1/3 | 1,300 | 20 | 16 | 1.80 |
| Ex. 3-2 | 1/3 | 1,500 | 20 | 16 | 1.79 |
| Comp. Ex. 1-1 | PBB only | 1,300 | 12 | 9 | 1.82 |
| Comp. Ex. 1-2 | PBB only | 1,500 | 12 | 9 | 1.81 |

As presented in Table 1 above, the carbon fibers according to Examples 1-1 to 3-2 have slightly low or almost equivalent densities as compared with the carbon fibers according to Comparative Examples 1-1 and 1-2. The densities of the carbon fibers according to Examples 1-1 to 3-2 are almost equivalent to the densities of commercially available PAN-type carbon fibers which are about 1.76 to about 1.81. Therefore, the carbon fibers according to Examples 1-1 to 3-2 can be produced to have equivalent densities to those of the practical products.

Also, the carbon fibers according to Examples 1-1 to 3-2 can be made thicker to have a diameter of 9 µm or 16 µm, as compared with the diameters of commercially available carbon fibers which are 5 µm to 7 µm.

### -Crystallinity and Orientation-

Strength and elasticity of a carbon fiber depend on crystallinity and orientation of graphite crystals constituting the carbon fiber.

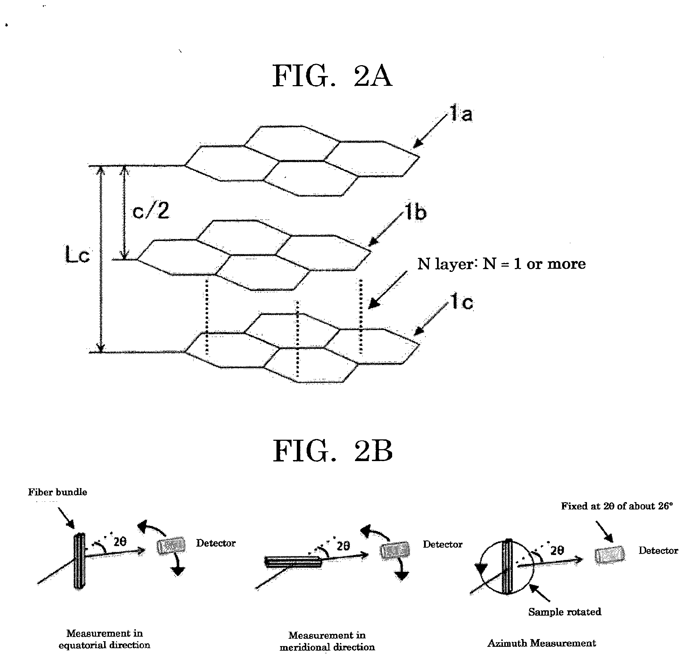

Here, first, plane interval c/2 of carbon network planes and stack thickness L_{c} of carbon network planes were measured as parameters indicating crystallinity of graphite crystals. FIG. 2A is a conceptual diagram indicating plane interval c/2 of carbon network planes and stack thickness L_{c} of carbon network planes in a graphite crystal. Note that, reference signs 1a, 1b and 1c in FIG. 2A denote carbon network planes.

The measurement of the plane interval c/2 of carbon network planes and the stack thickness L_{c} of carbon network planes was performed by measuring a wide angle X-ray diffraction profile with an X-ray diffraction device using CuKα rays monochromatized with a Ni filter as an X-ray source. Specifically, in the optical system for an equatorial direction illustrated in FIG. 2B, the plane interval c/2 of carbon network planes and the stack thickness L_{c} of carbon network planes were obtained from the peak of plane index (002) observed at 2θ of about 26° in the equatorial direction profile. Note that, FIG. 2B is a conceptual diagram indicating an optical system in measuring a wide angle X-ray diffraction profile, where the equatorial direction is a direction in which the detector is perpendicular to the fiber axis and the meridional direction is a direction in which the detector is in parallel with the fiber axis. Further, azimuth measurement is performed by rotating the fiber from the meridional direction via the equatorial direction to the meridional direction to obtain a profile of its X-ray intensity distribution in a state where the detector is fixed at 2θ of about 26° using the X-ray diffraction device.

Next, orientation degree f of the graphite crystals obtained from the above-described azimuth measurement is used as an index of a carbon fiber having practical strength and elastic modulus. Note that, this orientation degree f is referred to as a practical orientation degree, and in the case of carbon materials, it is calculated from the formula: f = (1 - H°/180) × 100, where (H°) denotes a full-width at half maximum of the intensity distribution measured along a so-called Debye ring of the 002 plane reflection of the graphite crystals observed at 2θ of about 26°. In FIG. 2A, the case where f = 100 means that the carbon crystal network planes are all arranged in the fiber axis direction, and the case where f = 0 means that the carbon crystal network planes are arranged randomly with respect to the fiber axis direction.

Table 2 below presents the plane interval c/2 of the carbon network planes, the stack thickness L_{c} of the carbon network planes, and the orientation degrees (f) of the graphite crystals in the carbon fibers according to Examples 1-2, 2-2, and 3-2 and the carbon fibers according to Comparative Example 1-2, which were carbonized at the carbonization temperature of 1,500°C, and the PAN-type carbon fibers and the pitch-type carbon fibers. Note in Table 2 below that, "*" means that the indicated values are the numerical values disclosed in Referential Document 1.
Referential Document 1; A. Takaku, et al., J. Mater. Sci., 25, 4873 (1990)

**Table 2**

| Ex./Comp. Ex. | c/2 [nm] | L_{c} [nm] | F [%] |
|---|---|---|---|
| Ex. 1-2 | 0.351 | 1.68 | 77.2 |
| Ex. 2-2 | 0.348 | 1.87 | 78.8 |
| Ex. 3-2 | 0.342 | 1.88 | 77.3 |
| Comp. Ex. 1-2 | 0.349 | 1.86 | 80.8 |
| Commercially available PAN-type carbon fibers* | 0.350 | 2.31 | 84.2 |
| Commercially available pitch-type carbon fibers* | 0.351 | 4.93 | 79.5 |

As presented in Table 2 above, the values of the plane interval c/2 of the carbon network planes, the stack thickness L_{c} of the carbon network planes, and the orientation degrees f of the carbon fibers according to Examples 1-2, 2-2, and 3-2 are equivalent to those of the carbon fibers according to Comparative Example 1-2 derived from PBB, indicating that the carbon fibers excellent in mechanical strengths can be produced at a lower cost.

Also, the values of the plane interval c/2 of the carbon network planes and the orientation degrees f of the carbon fibers according to Examples 1-2, 2-2, and 3-2 are high values comparable to those of PAN-type carbon fibers and pitch-type carbon fibers.

### Reference Signs List

- 1a, 1b, 1c: carbon network planes
- c/2: plane interval of carbon network planes
- L_{c}: stack thickness of carbon network planes

## Claims

1. A carbon fiber precursor fiber, comprising:
a polymer containing a constituent unit represented by General Formula (1) below: 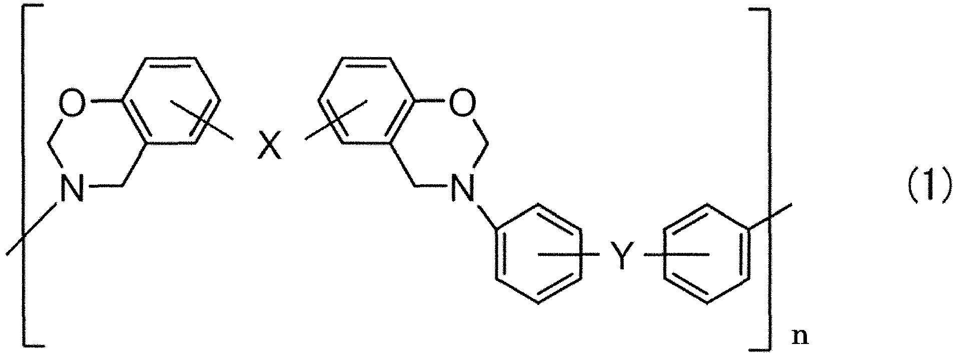 where in the General Fomula (1), X and Y each independently represent a divalent substituent, a single bond, or a structure forming a fused ring by sharing one side of two adjacent rings, and the divalent substituent is selected from the group consisting of -O-, -S-, -OSO-, -NH-, -CO-, -CH₂-, and -C(CH₃)₂- and where n is the number of repeating units of the constituent unit represented by General Formula (1), wherein n is 100 to 100.000.

2. The carbon fiber precursor fiber according to claim 1, further comprising a polymer containing a constituent unit represented by General Formula (2) below: 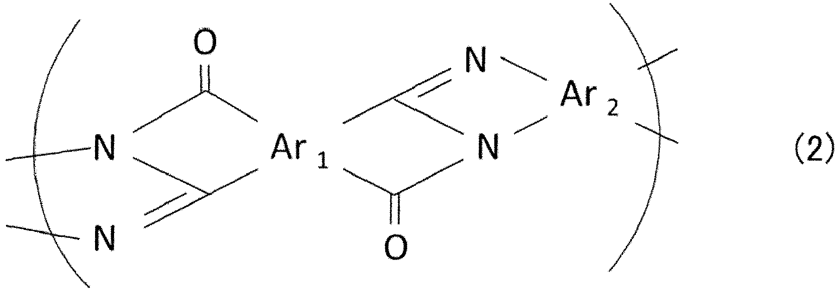 where in the General Formula (2), Ar₁ represents an aryl group expressed by any one of Structural Formulas (1) to (5) below, and Ar₂ represents an aryl group expressed by Structural Formula (6) or (7) below:

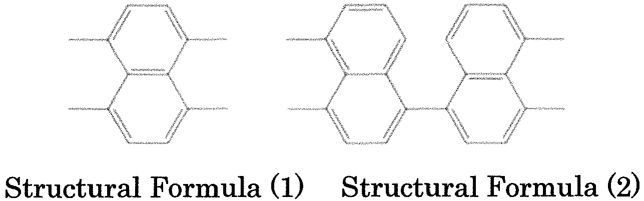

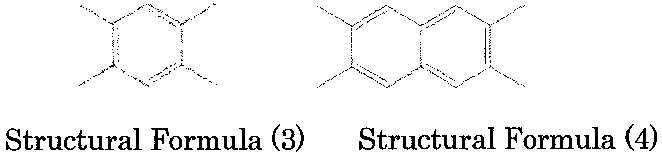

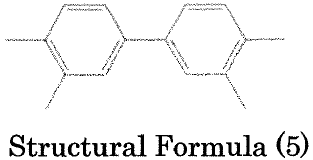

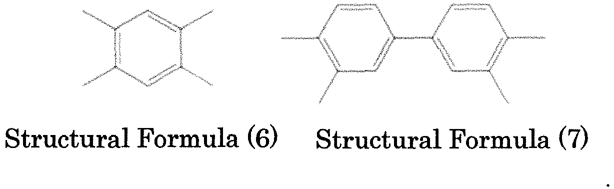

3. A method for producing a carbon fiber, the method comprising:
spinning a compound to be spun containing a polymer containing a constituent unit represented by General Formula (1) below to obtain a carbon fiber precursor fiber; and
heating the carbon fiber precursor fiber under inert gas to carbonize the carbon fiber precursor fiber: 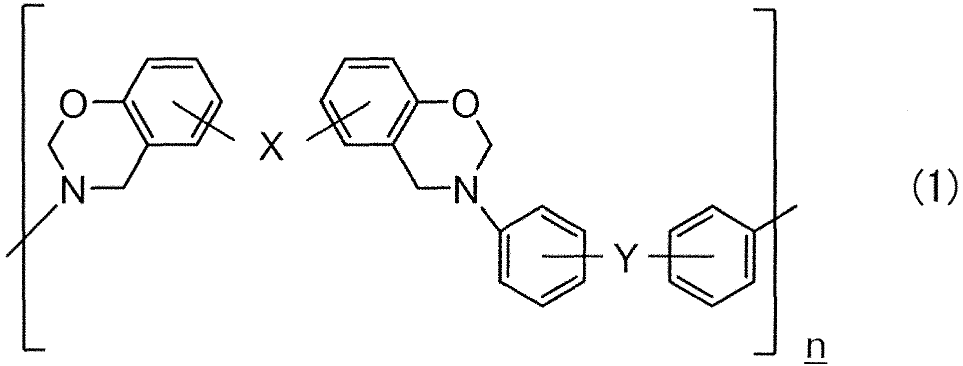
where in the General Fomula (1), X and Y each independently represent a divalent substituent, a single bond, or a structure forming a fused ring by sharing one side of two adjacent rings, and the divalent substituent is selected from the group consisting of -O-, -S-, -OSO-, -NH-, -CO-, -CH₂-, and -C(CH₃)₂-, where n is the number of repeating units of the constituent unit represented by General Formula (1).

4. The method for producing a carbon fiber according to claim 3, wherein the spinning is spinning the compound to be spun containing the polymer containing the constituent unit represented by the General Formula (1) and a compound to be spun containing a constituent unit represented by General Formula (2) below, to obtain a carbon fiber precursor fiber: 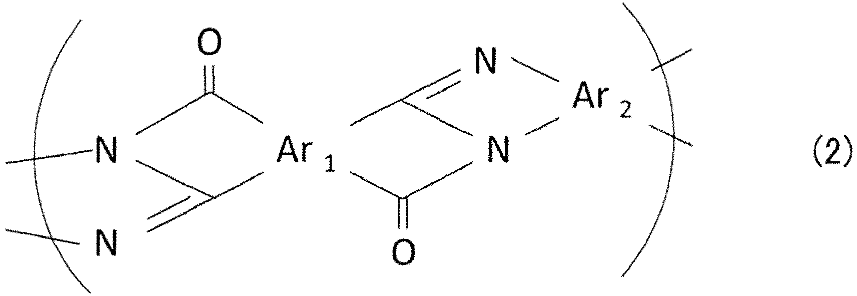 where in the General Formula (2), An represents an aryl group expressed by any one of Structural Formulas (1) to (5) below, and Ar₂ represents an aryl group expressed by Structural Formula (6) or (7) below:

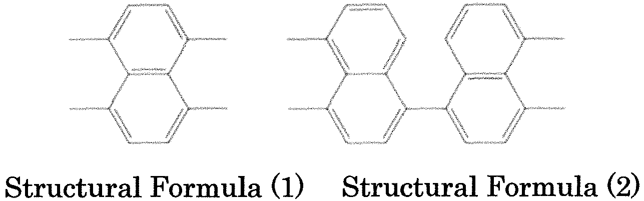

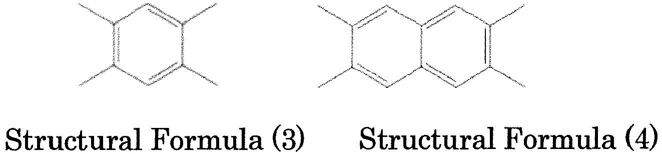

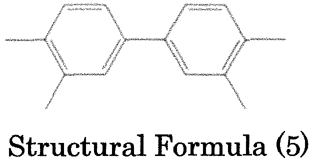

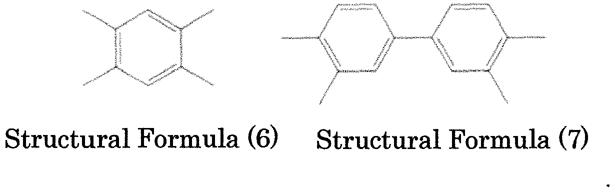

## Patentansprüche

1. Kohlenstofffaser-Vorläuferfaser, umfassend: ein Polymer, das eine Grundeinheit enthält, die durch die nachstehende allgemeine Formel (1) dargestellt wird: 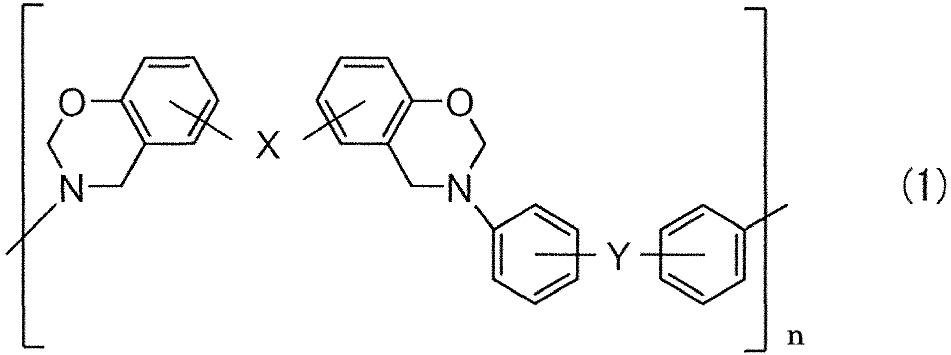 wobei in der allgemeinen Formel (1) X und Y jeweils unabhängig voneinander einen zweiwertigen Substituenten, eine Einfachbindung oder eine Struktur darstellen, die einen kondensierten Ring bildet, indem sie eine Seite von zwei benachbarten Ringen gemeinsam nutzt, und der zweiwertige Substituent aus der Gruppe ausgewählt ist, die aus -O-, -S-, -OSO-, -NH-, -CO-, -CH₂- und -C(CH₃)₂- besteht, und wobei n die Anzahl der sich wiederholenden Einheiten der durch die allgemeine Formel (1) dargestellten Grundeinheit ist, wobei n 100 bis 100.000 beträgt.

2. Kohlenstofffaser-Vorläuferfaser nach Anspruch 1, die ferner ein Polymer umfasst, das eine durch die nachstehende allgemeine Formel (2) dargestellte Grundeinheit enthält: 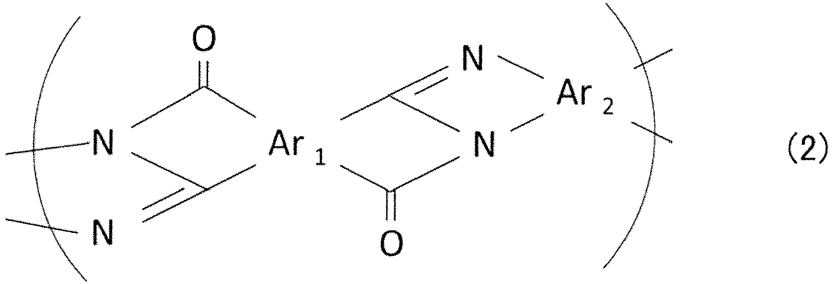 wobei in der allgemeinen Formel (2) An für eine Arylgruppe steht, die durch eine der nachstehenden Strukturformeln (1) bis (5) dargestellt wird, und Ar₂ für eine Arylgruppe steht, die durch die nachstehende Strukturformel (6) oder (7) dargestellt wird:

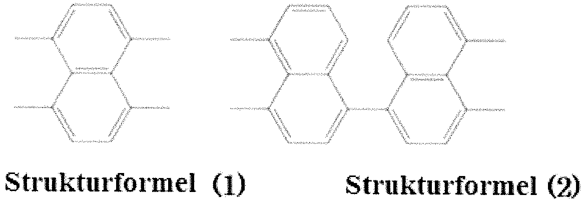

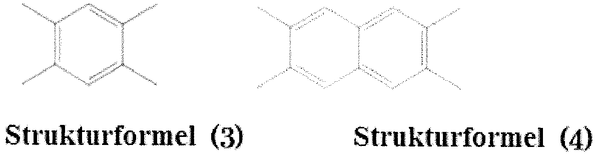

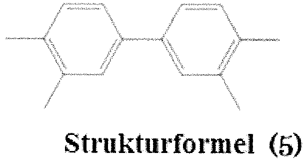

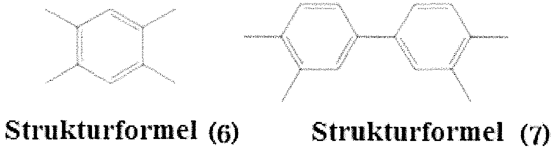

3. Verfahren zur Herstellung einer Kohlenstofffaser, wobei das Verfahren umfasst:
Spinnen einer zu spinnenden Verbindung, die ein Polymer enthält, das eine durch die nachstehende allgemeine Formel (1) dargestellte Grundeinheit enthält, um eine Kohlenstofffaser-Vorläuferfaser zu erhalten; und
Erhitzen der Kohlenstofffaser-Vorläuferfaser unter Inertgas, um die Kohlenstofffaser-Vorläuferfaser zu karbonisieren: 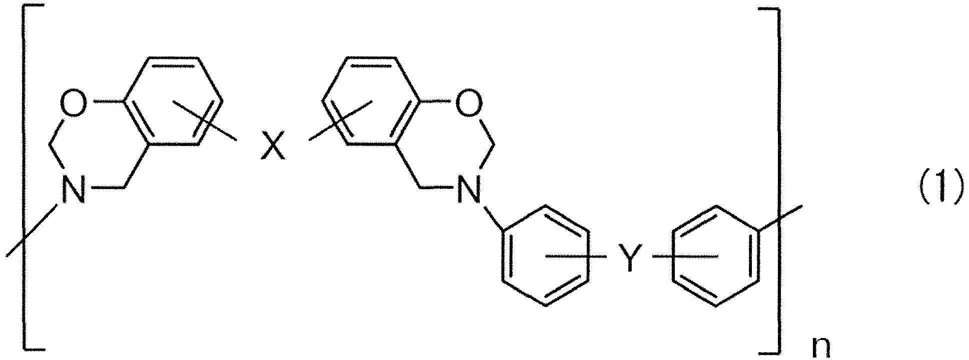
wobei in der allgemeinen Formel (1) X und Y jeweils unabhängig voneinander einen zweiwertigen Substituenten, eine Einfachbindung oder eine Struktur darstellen, die einen kondensierten Ring bildet, indem sie eine Seite von zwei benachbarten Ringen gemeinsam nutzt, und der zweiwertige Substituent aus der Gruppe ausgewählt ist, die aus -O-, -S-, -OSO-, -NH-, -CO-, -CH₂- und -C(CH₃)₂- besteht, wobei n die Anzahl der sich wiederholenden Einheiten der durch die allgemeine Formel (1) dargestellten Grundeinheit ist.

4. Verfahren zur Herstellung einer Kohlenstofffaser nach Anspruch 3, wobei das Spinnen das Spinnen der zu spinnenden Verbindung, die das Polymer enthält, das die durch die allgemeine Formel (1) dargestellte Grundeinheit enthält, und einer zu spinnenden Verbindung, die eine durch die nachstehende allgemeine Formel (2) dargestellte Grundeinheit enthält, ist, um eine Kohlenstofffaser-Vorläuferfaser zu erhalten: 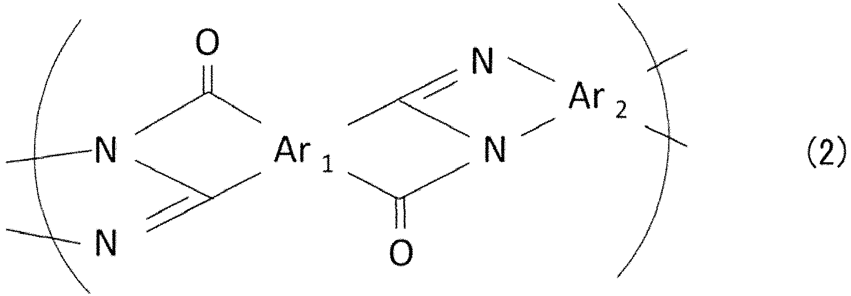 wobei in der allgemeinen Formel (2) An eine Arylgruppe darstellt, die durch eine der folgenden Strukturformeln (1) bis (5) dargestellt wird, und Ar₂ eine Arylgruppe darstellt, die durch die folgende Strukturformel (6) oder (7) dargestellt wird:

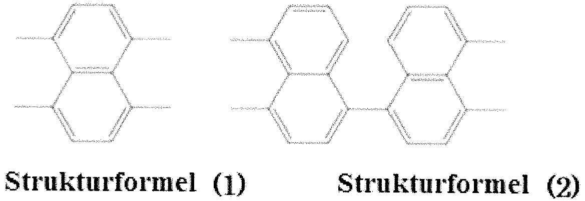

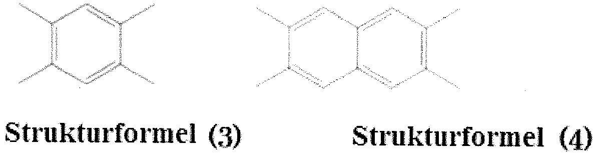

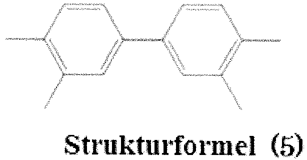

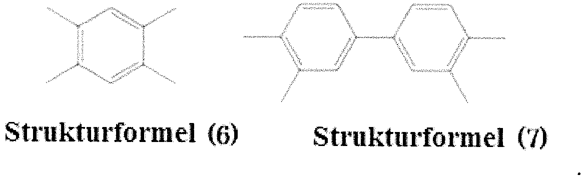

## Revendications

1. Fibre précurseur de fibre de carbone, comprenant :
un polymère contenant un motif constitutif représenté par la formule générale (1) ci-dessous : 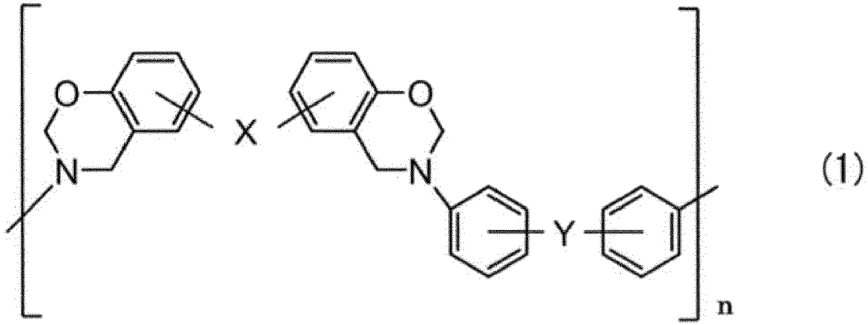
où dans la formule générale (1), X et Y représentent chacun indépendamment un substituant divalent, une liaison simple ou une structure formant un cycle condensé par partage d'un côté de deux cycles adjacents, et le substituant divalent est choisi dans le groupe constitué de -O-, -S-, -OSO-, -NH-, -CO-, -CH₂ - et -C(CH₃)₂- et où n dans le nombre de motifs de répétition du motif constitutif représenté par la formule générale (1), dans laquelle n est 100 à 100 000.

2. Fibre précurseur de fibre de carbone selon la revendication 1, comprenant en outre un polymère contenant un motif constitutif représenté par la formule générale (2) ci-dessous : 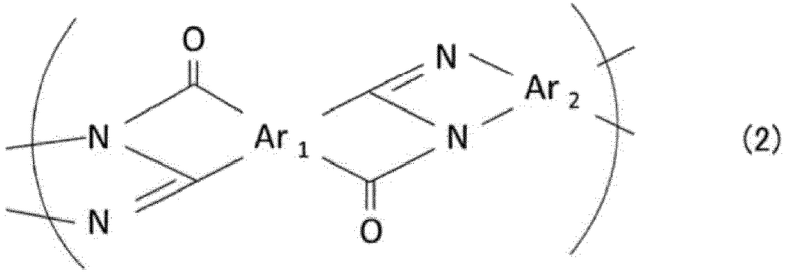 où dans la formule générale (2), Ar₁ représente un groupe aryle exprimé par l'une quelconque des formules développées (1) à (5) ci-dessous, et Ar₂ représente un groupe aryle exprimé par la formule développée (6) ou (7) ci-dessous :

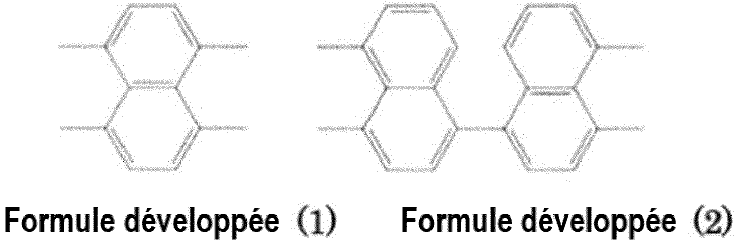

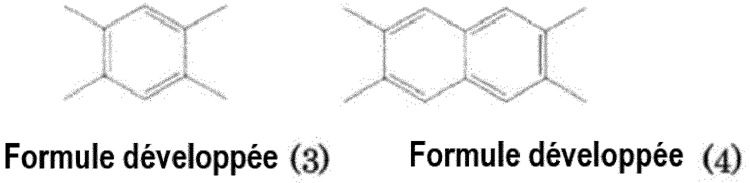

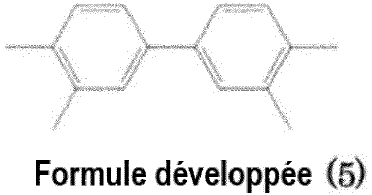

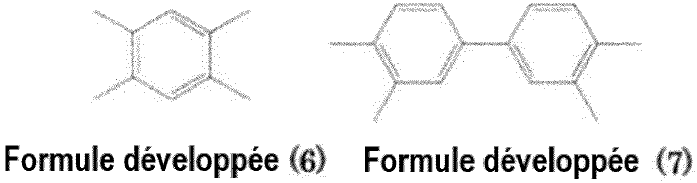

3. Procédé de production d'une fibre de carbone, le procédé comprenant :
le filage d'un composé à filer contenant un polymère contenant un motif constitutif représenté par la formule générale (1) ci-dessous pour obtenir une fibre précurseur de fibre de carbone ; et
le chauffage de la fibre précurseur de fibre de carbone sous gaz inerte pour carboniser la fibre précurseur de fibre de carbone : 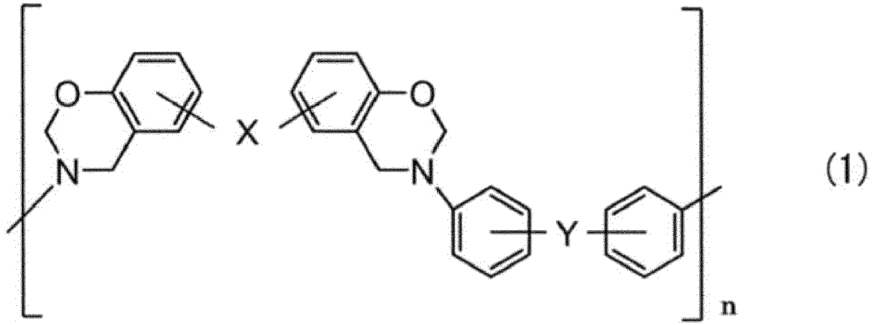
où dans la formule générale (1), X et Y représentent chacun indépendamment un substituant divalent, une liaison simple ou une structure formant un cycle condensé par partage d'un côté de deux cycles adjacents, et le substituant divalent est choisi dans le groupe constitué de -O-, -S-, -OSO-, -NH-, -CO-, -CH₂ - et -C(CH₃)₂-, où n est le nombre de motifs de répétition du motif constitutif représenté par la formule générale (1).

4. Procédé de production d'une fibre de carbone selon la revendication 3, dans lequel le filage consiste à filer le composé à filer contenant le polymère contenant le motif constitutif représenté par la formule générale (1) et un composé à filer contenant un motif constitutif représenté par la formule générale (2) ci-dessous, pour obtenir une fibre précurseur de fibre de carbone : 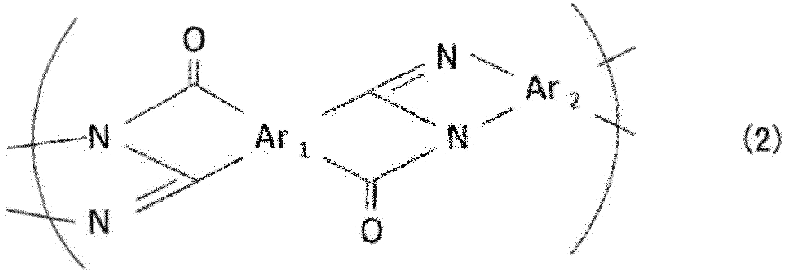 où dans la formule générale (2), Ar₁ représente un groupe aryle exprimé par l'une quelconque des formules développées (1) à (5) ci-dessous, et Ar₂ représente un groupe aryle exprimé par la formule développée (6) ou (7) ci-dessous :
